# EUROPEAN PATENT APPLICATION

(11) **EP 4 726 842 A1**
(43) Date of publication of application: **15.04.2026**
(21) Application number: 23944204.9
(22) Date of filing: 28.11.2023
(51) Int. Cl.: H01M 10/058

(54) **RESTRAINING STRUCTURE AND BATTERY RESTRAINING APPARATUS**

(30) Priority: 04.07.2023 CN 202321731798 U
(71) Applicant: Contemporary Amperex Technology Co., Limited, Ningde, Fujian 352100 (CN)
(72) Inventor: ZHAO, Jiayi, Ningde, Fujian 352100 (CN); LIU, Qiufeng, Ningde, Fujian 352100 (CN); HU, Chuanqi, Ningde, Fujian 352100 (CN); LIN, Wu, Ningde, Fujian 352100 (CN); HUANG, Fangyu, Ningde, Fujian 352100 (CN); WANG, Zhihui, Ningde, Fujian 352100 (CN)
(74) Representative: Kraus & Lederer PartGmbB
(86) International application number: PCT/CN2023/134730
(87) International publication number: WO 2025/007483

(57) **Abstract**

The present application is applicable to the technical field of batteries and provides a restraint structure (100) and a battery restraint apparatus (1000). The battery restraint apparatus (1000) includes a restraint structure (100), the restraint structure (100) including a restraint frame (10), a cushion pad (20), and a positioning column (30). The restraint frame (10) is provided with a positioning hole (101); the cushion pad (20) is arranged on the restraint frame (10); and the positioning column (30) is arranged on the cushion pad (20) and is inserted and fitted into the positioning hole (101). The positioning hole (101) is formed in the restraint frame (10), and the positioning column (30) to be inserted and fitted into the positioning hole (101) is provided on the cushion pad (20), so that the positioning of the cushion pad (20) on the restraint frame (10) can be achieved by inserting the positioning column (30) on the cushion pad (20) into the positioning hole (101). In this way, the problem of misaligned assembly of the cushion pad (20) on the restraint frame (10) can be mitigated, thereby facilitating improving the restraint effect of the restraint structure (100) on a battery cell (2000).

## Description

### CROSS-REFERENCE

The present application claims priority to Chinese Patent Application No. 202321731798.8, filed with the China National Intellectual Property Administration on July 04, 2023 and titled "RESTRAINT STRUCTURE AND BATTERY RESTRAINT APPARATUS", the disclosure of which is incorporated herein by reference in its entirety.

### TECHNICAL FIELD

The present application relates to the technical field of batteries, and in particular to a restraint structure and a battery restraint apparatus.

### BACKGROUND

In the battery manufacturing process, it is usually necessary to use a restraint structure to restrain the battery cell. The restraint structure includes a restraint frame and a cushion pad arranged on the restraint frame. The restraint structure contacts and squeezes the battery cell through the cushion pad to achieve restraint and cushion protection for the battery cell.

In some cases, when assembling the cushion pad and the restraint frame, it is difficult to assemble the cushion pad into the predetermined position on the restraint frame. There is a risk of misaligned assembly of the cushion pad on the restraint frame, which may affect the restraint effect of the restraint structure on the battery cell.

### SUMMARY OF THE INVENTION

In view of the aforementioned problem, it is an objective of embodiments of the present application to provide a restraint structure and a battery restraint apparatus, which can mitigate the problem of misaligned assembly of the cushion pad on the restraint frame.

The technical solutions that the embodiments of the present application adopt are as follows.

In a first aspect, an embodiment of the present application provides a restraint structure, including:
a restraint frame provided with a positioning hole;
a cushion pad arranged on the restraint frame; and
a positioning column arranged on the cushion pad and inserted and fitted into the positioning hole.

In the restraint structure provided by the embodiments of the present application, a positioning hole is formed in the restraint frame and a positioning column to be inserted and fitted into the positioning hole is provided on the cushion pad, so that the positioning of the cushion pad on the restraint frame can be achieved by inserting the positioning column into the positioning hole. In this way, the problem of misaligned assembly of the cushion pad on the restraint frame can be mitigated, thereby facilitating improving the restraint effect of the restraint structure on a battery cell.

In some embodiments, there are a plurality of positioning columns, which are spaced apart on the cushion pad; and the restraint frame is provided with a plurality of positioning holes that are spaced apart, and each positioning column is inserted and fitted into one of the positioning holes.

By adopting the foregoing technical solution, where the plurality of positioning columns on the cushion pad are inserted into the positioning holes on the restraint frame in one-to-one correspondence, on the one hand, the positioning strength and positioning accuracy of the cushion pad on the restraint frame can be improved, so as to mitigate the problem of misaligned assembly of the cushion pad on the restraint frame, and on the other hand, the assembly strength of the cushion pad on the restraint frame can be improved, so as to mitigate the problem that the cushion pad tends to fall off the restraint frame.

In some embodiments, the plurality of positioning columns on the cushion pad are distributed in an array.

In some embodiments, the positioning columns are inserted into the positioning holes along the first direction; the plurality of positioning columns include at least one first positioning column and at least one second positioning column, and the cross-sectional area of the first positioning column perpendicular to the first direction is greater than the cross-sectional area of the second positioning column perpendicular to the first direction.

Through such arrangement, the positioning strength and positioning accuracy of the cushion pad on the restraint frame can be improved, so as to mitigate the problem of misaligned assembly of the cushion pad on the restraint frame. Also, the positioning of the cushion pad on the restraint frame can be facilitated, so that the positioning and assembly efficiency of the cushion pad on the restraint frame can be improved.

In some embodiments, there is one first positioning column, and there are a plurality of second positioning columns.

Through such arrangement, the cushion pad is pre-positioned on the restraint frame via the first positioning column, which enables rapid positioning of the cushion pad on the restraint frame, thereby improving the positioning and assembly efficiency of the cushion pad on the restraint frame.

In some embodiments, the positioning columns are inserted into the positioning holes along the first direction; the positioning columns each include a column body and a guidance portion; in the first direction, one end of the column body is arranged on the cushion pad, the guidance portion is connected to the end of the column body away from the cushion pad, and the outer peripheral wall of the guidance portion is tapered along the direction away from the cushion pad.

Through such arrangement, the positioning column can be inserted into the positioning hole with guidance, so that the positioning of the cushion pad on the restraint frame can be facilitated, and the positioning and assembly efficiency of the cushion pad on the restraint frame can be improved.

In some embodiments, in at least one positioning column, the end of the guidance portion close to the column body extends beyond the outer peripheral wall of the column body.

In this way, the assembly strength of the cushion pad on the restraint frame can be improved.

In some embodiments, the positioning column is inserted into the positioning hole along the first direction; at least one positioning hole includes a first hole segment and a second hole segment in communication sequentially along the first direction, the diameter of the second hole segment is greater than the diameter of the first hole segment; the column body is inserted into the first hole segment, and the guidance portion is limited within the second hole segment along the direction from the second hole segment to the first hole segment.

Through such arrangement, it can be ensured that the positioning column does not extend beyond the side of the restraint frame away from the cushion pad along the first direction, thereby allowing the opposite sides of the restraint frame along the first direction both to be used for assembling the cushion pad to restrain the battery cell.

In some embodiments, at least one positioning column further includes a transition portion, the column body, the transition portion, and the guidance portion are arranged sequentially along the first direction, and the end of the guidance portion close to the column body extends beyond the outer peripheral wall of the column body; and the outer peripheral wall of the transition portion is tapered from the guidance portion to the column body.

By providing the transition portion, the guidance portion can be easily removed from the positioning hole, which in turn facilitates the removal of the positioning column from the positioning hole, and further facilitates the replacement of the cushion pad on the restraint frame.

In some embodiments, on the cross section of the positioning column parallel to the first direction, the outer peripheral wall of the guidance portion is provided as a convex arc surface, or the outer peripheral wall of the guidance portion is provided as an inclined surface relative to the first direction, or the outer peripheral wall of the guidance portion is provided as a combination of an inclined surface relative to the first direction and a convex arc surface.

In some embodiments, the cushion pad is provided integrally with the positioning column.

Through such arrangement, the positioning column is enabled to also have a cushion effect, allowing it to be squeezed and deformed to smoothly enter and exit the positioning hole. In this way, the installation and removal of the positioning column on the positioning hole is facilitated to facilitate the installation and removal of the cushion pad on the restraint frame.

In some embodiments, the positioning column is inserted into the positioning hole along the first direction; the restraint frame includes a frame body and a partition provided on the frame body, the partition has a positioning hole, and cushion pads are provided on opposite sides of the partition along the first direction.

Through such arrangement, the restraint structure is allowed to be located between two adjacent battery cells along the first direction, so as to restrain the two adjacent battery cells respectively.

In some embodiments, the positioning columns on the cushion pads on the opposite sides of the partition are staggered.

Through such arrangement, on the one hand, the positioning hole can be a through hole that runs through the partition along the first direction, meaning that the thickness of the partition can be made very small, which helps to reduce the size of the restraint structure along the first direction. On the other hand, it facilitates the positioning of the cushion pads on the opposite sides of the partition on the partition.

In some embodiments, the cushion pad is provided with a first side surface and a second side surface on opposite sides along the first direction respectively, the positioning column is arranged on the first side surface and inserted into the positioning hole along the first direction; and the second side surface is recessed at one or both ends along the second direction, the first direction intersecting with the second direction.

Through such arrangement, on the one hand, the problem of indentations pressed into the edges of a battery cell along the second direction can be mitigated; on the other hand, the cushion pad can guide the battery cell, which facilitates placement of the battery cell on the side of the restraint structure along the first direction, and particularly facilitates placement of the battery cell between two adjacent restraint structures along the first direction.

In some embodiments, the second side surface includes a first restraint surface and a second restraint surface arranged at one or both ends of the first restraint surface along the second direction; in the second direction, the distance between the second restraint surface and the first side surface gradually decreases along the direction away from the first restraint surface.

Through such arrangement, the problem of indentations pressed by the second restraint surface into the edges of a battery cell along the second direction can be mitigated; on the other hand, the second restraint surface can guide the battery cell, which facilitates placement of the battery cell on the side of the restraint structure along the first direction.

In some embodiments, on a cross section of the cushion pad perpendicular to a third direction, the second restraint surface is an inclined surface relative to the first and second directions or an arc surface, the third direction being perpendicular to the first and second directions.

In some embodiments, an included angle less than 45° is formed between extended planes of the second restraint surface and the first restraint surface.

Through such arrangement, the problem of indentations pressed by the cushion pad into the edges of a battery cell along the second direction can be mitigated; and also, the part of the cushion pad at the second restraint surface is still enabled to provide a certain restraint stress to the battery cell.

In some embodiments, the restraint structure further includes a separation film covering the cushion pad to separate the cushion pad from the battery cell.

Through such arrangement, on the one hand, the problem of the cushion pad sticking to the battery cell can be mitigated, and on the other hand, the problem of contaminants due to compression by the cushion pad remaining on the battery cell can be mitigated.

In a second aspect, an embodiment of the present application provides a battery restraint apparatus including a plurality of restraint structures.

With the battery restraint apparatus provided by the embodiments of the present application, by adopting the restraint structure mentioned above, the problem of misaligned assembly of the cushion pad on the restraint frame can be mitigated, thereby facilitating improving the restraint effect of the battery restraint apparatus on a battery cell.

The foregoing description is merely an overview of the technical solutions of the present application. In order that technical means of the present application can be understood more clearly so that the technical means can be implemented according to content of the specification, and in order that the foregoing and other objectives, features, and advantages of the present application can be understood more clearly, specific implementations of the present application are described below.

### DESCRIPTION OF DRAWINGS

In order to explain the technical solutions in the embodiments of the present application more clearly, the accompanying drawings needed in the description of the embodiments or demonstrative technologies will be briefly introduced below. Obviously, the accompanying drawings in the following descriptions represent only some embodiments of the present application. For a person of ordinary skill in the art, other accompanying drawings can be obtained according to these accompanying drawings without creative work.
FIG. 1 is a top view of a battery restraint apparatus according to some embodiments of the present application combined with a battery cell;
FIG. 2 is a perspective view of two restraint structures of the battery restraint apparatus shown in FIG. 1 combined with a battery cell;
FIG. 3 is an exploded view of the structure shown in FIG. 2;
FIG. 4 is a schematic view of a cushion pad combined with a positioning column in a restraint structure according to some embodiments of the present application;
FIG. 5 is a schematic perspective view of a restraint frame of a restraint structure according to some embodiments of the present application;
FIG. 6 is a partial schematic view of a restraint structure according to some embodiments of the present application;
FIG. 7 is a cross-sectional view taken along line A-A of FIG. 6;
FIG. 8 is an enlarged view of a portion B in FIG. 7;
FIG. 9 is an exploded view of the enlarged view shown in FIG. 8;
FIG. 10 is an enlarged view of a portion C in FIG. 7;
FIG. 11 is an exploded view of the enlarged view shown in FIG. 10; and
FIG. 12 is a schematic perspective view of a cushion pad of a restraint structure according to some embodiments of the present application.

### Reference Numerals in the Drawings:

1000-Battery restraint apparatus; 100-Restraint structure; 200-Tray; 2000-Battery cell; 10-Restraint frame; 101-Positioning hole; 101a-First positioning hole; 101b-Second positioning hole; 1011-First hole segment; 1012-Second hole segment; 11-Frame body; 12-Partition; 20-Cushion pad; 201-First side surface; 202-Second side surface; 2021-First restraint surface; 2022-Second restraint surface; 30-Positioning column; 30a-First positioning column; 30b-Second positioning column; 31-Column body; 32-Guidance portion; 33-Transition portion; 40-Separation film; Z-First direction; Y-Second direction; X-Third direction.

### DETAILED DESCRIPTION

The embodiments of the present application are described in detail below. Examples of the embodiments are illustrated in the accompanying drawings, where the same or similar labels from beginning to end denote the same or similar components or components having the same or similar functions. The embodiments described below with reference to the accompanying drawings are exemplary and are intended to explain the present application, but should not be construed as limiting the present application.

In the descriptions of the present application, it should be understood that orientations or positional relationships indicated by "length", "width", "upper", "lower", "front", "rear", "left", "right", "vertical", "horizontal", "top", "bottom", "inner", "outer", and the like are orientations or positional relationships as shown in the drawings, and are only for the purpose of facilitating and simplifying the descriptions of the present application instead of indicating or implying that devices or elements indicated must have particular orientations, and be constructed and operated in the particular orientations, so that these terms are not construed as limiting The present application.

In addition, the terms "first" and "second" are used for descriptive purposes only, and cannot be construed as indicating or implying relative importance or implicitly indicating the number of technical features indicated. From this, features defined as "first" and "second" may explicitly or implicitly include one or more features.

In the description of the present application, the term "a plurality" means two or more, unless otherwise explicitly and specifically defined, and "two or more" includes two. Correspondingly, the term "a plurality of groups" means two groups or more, including two groups.

In the description of the present application, unless otherwise expressly specified and limited, terms such as "mount", "connected", "connect", and "fix" should be broadly understood, for example, they may be a fixed connection or a detachable connection or be integrated; or may be a mechanical connection or an electrical connection; or may be a direct connection or an indirect connection through an intermediate medium, or may be a communication between the interior of two elements or an interaction of two elements. For those of ordinary skill in the art, the specific meanings of the aforementioned terms in the present application may be understood on a case-by-case basis.

In the description of the present application, the term "and/or" is simply a description of an association of associated objects, which indicates that there may exist three relationships, for example, A and/or B may mean: the presence of A, the presence of both A and B, and the presence of B. In addition, the character "/" in the present application generally means that the associated objects before and after it are in an "or" relationship.

While the present application has been described with reference to the preferred examples, various modifications may be made and components thereof may be replaced with equivalents without departing from the scope of the present application. In particular, the technical features mentioned in the various embodiments can be combined in any manner as long as there is no structural conflict. The present application is not limited to the specific embodiments disclosed herein, but rather includes all technical solutions falling within the scope of the claims.

In the battery manufacturing process, it is usually necessary to use a battery restraint apparatus to restrain the battery cell. For example, during the formation stage, gas is generated inside the battery cell, requiring the battery cell to be transferred to the battery restraint apparatus. By squeezing the battery cell using the battery restraint apparatus, the gas inside the battery cells can be discharged to the outside. Also, for example, by squeezing the battery cell using the battery restraint apparatus, structures such as the pole piece and the separation film inside the battery cell can be made more compact.

In related technologies, the battery restraint apparatus includes a plurality of restraint structures, with two adjacent restraint structures positioned on opposite sides of the battery cell to jointly restrain the battery cell. The restraint structure includes a restraint frame and a cushion pad arranged on the restraint frame. The restraint structure contacts and squeezes the battery cell through the cushion pad to achieve restraint and cushion protection for the battery cell.

In some cases, when assembling the cushion pad and the restraint frame, it is difficult to assemble the cushion pad into the predetermined position on the restraint frame. There is a risk of misaligned assembly of the cushion pad on the restraint frame, which may affect the restraint effect of the restraint structure on the battery cell.

In view of this, the embodiments of the present application provide a restraint structure and a battery restraint apparatus in which a positioning hole is formed in the restraint frame and a positioning column to be inserted and fitted into the positioning hole is provided on the cushion pad, so that the positioning of the cushion pad on the restraint frame can be achieved by inserting the positioning column into the positioning hole. In this way, the problem of misaligned assembly of the cushion pad on the restraint frame can be mitigated, thereby facilitating improving the restraint effect of the restraint structure on the battery cell.

The battery restraint apparatus described in the embodiments of the present application is mainly used to restrain a battery cell. The battery cell refers to the smallest unit for storing and outputting electrical energy. Specifically, the battery cell may be a secondary battery or a primary battery. The battery cell may be, but is not limited to, a metal battery, a lithium-sulfur battery, a sodium-ion battery, or a magnesium-ion battery. In some scenarios, the battery cell may also be called a battery core, or the like.

The battery restraint apparatus described in the embodiments of the present application may include a plurality of restraint structures, and the battery restraint apparatus restrains a battery cell through the restraint structures. Specifically, each battery cell is positioned between two adjacent restraint structures so as to be restrained through the two adjacent restraint structures.

The restraint structure described in the embodiments of the present application can be used to restrain a battery cell, or to restrain other structures than a battery cell. For ease of description, the embodiments of the present application are illustrated using the restraint structure for restraining a battery cell as an example. The same principle applies to the restraint structure for restraining other structures, which will not be elaborated herein.

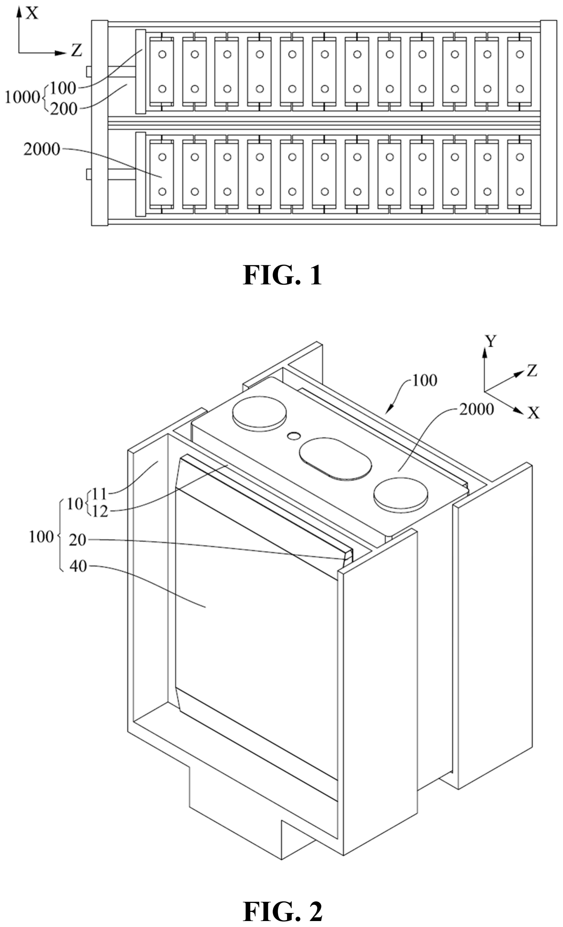

Referring to FIG. 1, FIG. 1 is a top view of a battery restraint apparatus 1000 according to some embodiments of the present application combined with a battery cell 2000. The battery restraint apparatus 1000 includes a tray 200 and a plurality of restraint structures 100 arranged on the tray 200. The plurality of restraint structures 100 are arranged into at least one row. When there are a plurality of rows of restraint structures 100, the plurality of rows of restraint structures 100 are spaced apart. A row of restraint structures 100 includes a plurality of restraint structures 100. The plurality of restraint structures 100 are arranged sequentially along the first direction Z. A battery cell 2000 is arranged between every two adjacent restraint structures 100 along the first direction Z. The two adjacent restraint structures 100 along the first direction Z jointly restrain the battery cell 2000 between them.

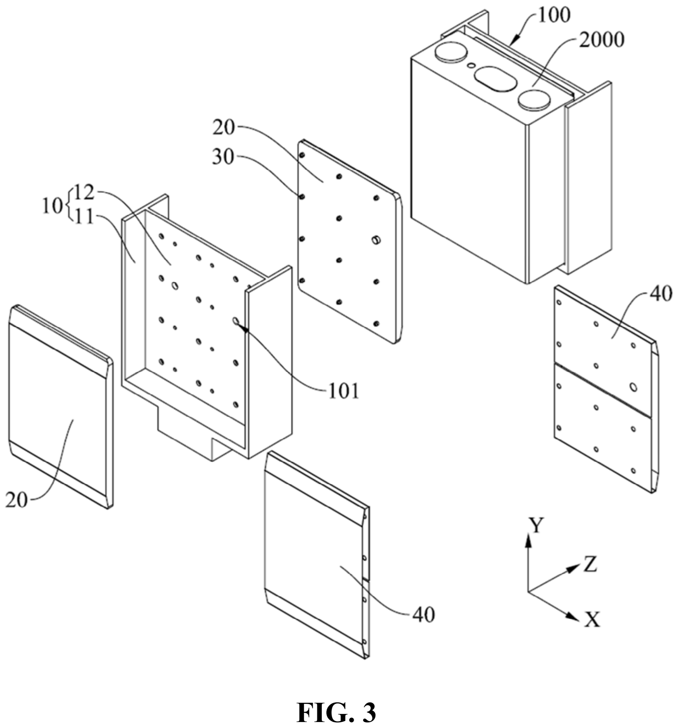

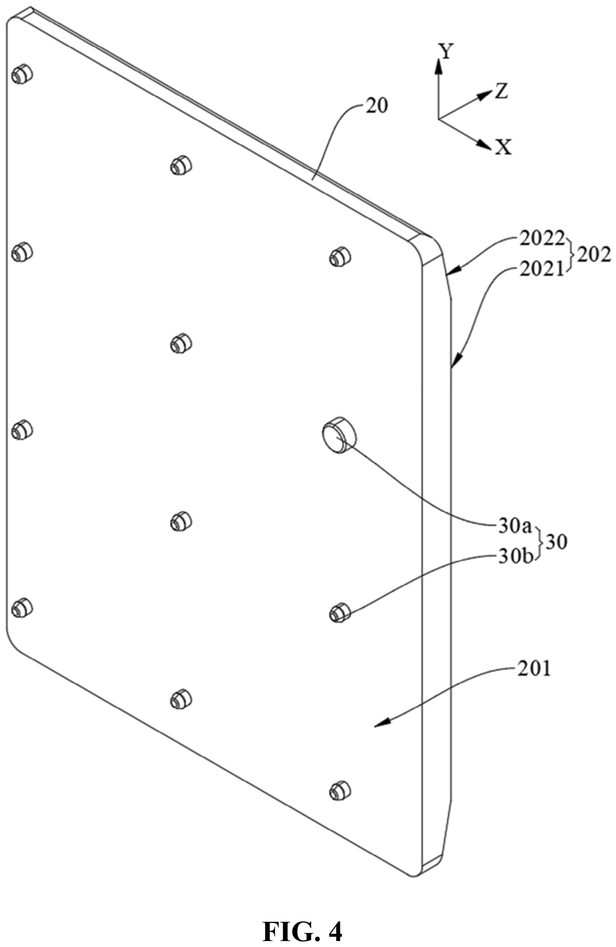

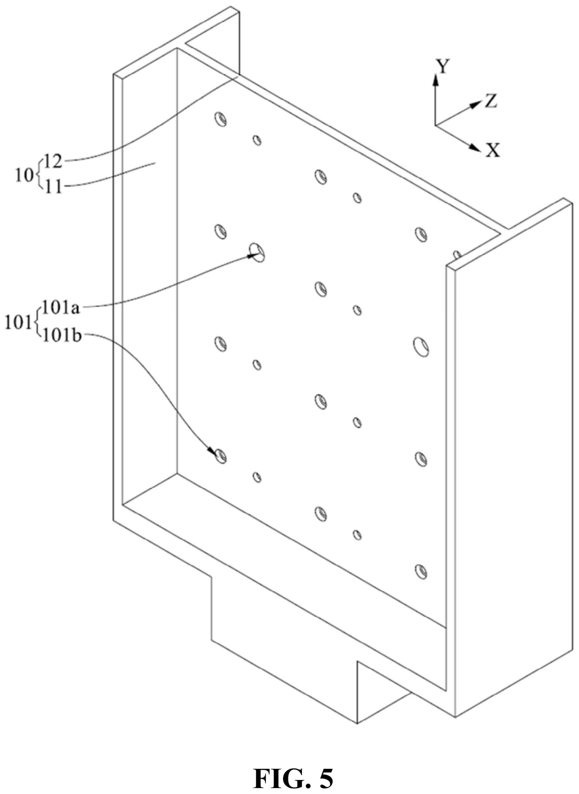

Referring to FIGS. 2 to 5 together. FIG. 2 is a perspective structural view showing two restraint structures 100 of the battery restraint apparatus 1000 provided in some embodiments of this application jointly restrain the battery cell 2000. FIG. 3 is an exploded view of the structure shown in FIG. 2. FIG. 4 is a schematic perspective view of the cushion pad 20 combined with the positioning column 30 of the restraint structure 100 provided in some embodiments of the present application. FIG. 5 is a schematic perspective view of the restraint frame 10 of the restraint structure 100 provided in some embodiments of the present application. The restraint structure 100 provided by the embodiments of the present application includes a restraint frame 10, a cushion pad 20, and a positioning column 30. The restraint frame 10 is provided with a positioning hole 101. The cushion pad 20 is arranged on the restraint frame 10. The positioning column 30 is arranged on the cushion pad 20 and inserted and fitted into the positioning hole 101.

The restraint frame 10 is the frame part of the restraint structure 100, and the restraint frame 10 is used for assembling the cushion pad 20. Specifically, the restraint frame 10 is arranged on the tray 200.

The cushion pad 20 refers to a component with cushioning properties. The cushion pad 20 may be a silicone pad, a rubber pad, etc. When the restraint structure 100 restrains the battery cell 2000, the cushion pad 20 is located between the restraint frame 10 and the battery cell 2000. One side of the cushion pad 20 elastically abuts against the battery cell 2000, and the other side of the cushion pad 20 elastically abuts against the restraint frame 10, so that the cushion pad 20 provides pressure to the battery cell 2000 under the action of the restraint frame 10, so as to restrain the battery cell 2000. Furthermore, the cushion pad 20 is also elastically compressed, so that the cushion pad 20 provides a cushioning effect for the battery cell 2000, thereby achieving cushioning protection for the battery cell 2000.

The positioning column 30 is a columnar structure. The positioning column 30 has an axial direction. The axial direction of the positioning column 30 refers to the extension direction of the positioning column 30. Specifically, the positioning column 30 may be a cylindrical structure, that is, the cross section of the positioning column 30 perpendicular to the axial direction is circular. Of course, the cross section of the positioning column 30 perpendicular to the axial direction may alternatively be elliptical, triangular, square, prismatic, or in other shapes.

The positioning hole 101 may be a through hole that passes through the restraint frame 10, or it may be a hole that does not pass through the restraint frame 10. The positioning hole 101 has an axial direction. The axial direction of the positioning hole 101 is parallel to the axial direction of the positioning column 30.

For ease of description, the axial direction mentioned in the embodiments below refers to the axial direction of the positioning column 30, which is also the axial direction of the positioning hole 101.

It can be understood that the positioning column 30 is inserted into the positioning hole 101 along the axial direction. As an example, as shown in FIG. 4, the axial direction of the positioning column 30 and the axial direction of the positioning hole 101 are both parallel to the direction Z. That is, the positioning column 30 is inserted into the positioning hole 101 along the direction Z to achieve positioning between the positioning column 30 and the restraint frame 10, thereby achieving positioning of the cushion pad 20 on the restraint frame 10. Specifically, the axial direction is parallel to the first direction Z referred to hereinafter. That is, the positioning column 30 is inserted into the positioning hole 101 along the first direction Z.

In the restraint structure 100 provided by the embodiments of the present application, the positioning hole 101 is formed in the restraint frame 10, and the positioning column 30 to be inserted and fitted into the positioning hole 101 is provided on the cushion pad 20, so that the positioning of the cushion pad 20 on the restraint frame 10 can be achieved by inserting the positioning column 30 on the cushion pad 20 into the positioning hole 101. In this way, the problem of misaligned assembly of the cushion pad 20 on the restraint frame 10 can be mitigated, thereby facilitating improving the restraint effect of the restraint structure 100 on the battery cell 2000.

Furthermore, when assembling the cushion pad 20, it is necessary only to insert the positioning column 30 into the positioning hole 101 of the restraint frame 10 to achieve the positioning of the cushion pad 20 on the restraint frame 10, making the assembly of the cushion pad 20 on the restraint frame 10 very simple and convenient, which facilitates improving the manufacturing efficiency of the battery restraint apparatus 1000.

In addition, the positioning column 30 is arranged on the cushion pad 20 and inserted into the positioning hole 101, which can also improve the assembly strength of the cushion pad 20 on the restraint frame 10 and mitigate the problem of falloff of the cushion pad 20.

In some embodiments, refer collectively to FIGS. 3 to 5, and also in combination with other drawings. There are a plurality of positioning columns 30, and the plurality of positioning columns 30 are spaced apart on the cushion pad 20. The restraint frame 10 is provided with a plurality of positioning holes 101 that are spaced apart, and each positioning column 30 is inserted and fitted into one of the positioning holes 101.

The number of the positioning columns 30 is the same as the number of the positioning holes 101, and the plurality of positioning columns 30 are inserted and fitted into the plurality of positioning holes 101 in one-to-one correspondence.

As an example, as shown in FIGS. 3 to 5, the plurality of positioning columns 30 on the cushion pad 20 can be distributed in an array. Specifically, the plurality of positioning columns 30 are arranged into a plurality of rows of positioning columns 30, the plurality of rows of positioning columns 30 are spaced apart along the direction X, and each row of positioning columns 30 includes a plurality of positioning columns 30 spaced apart along the direction Y. In this way, the plurality of positioning columns 30 are distributed in an array along the directions X and Y. Accordingly, the plurality of positioning holes 101 in the restraint frame 10 are also distributed in an array corresponding to the positioning columns 30, so that each positioning column 30 is inserted and fitted into one of the positioning holes 101 in one-to-one correspondence. Here, the direction X, direction Y, and direction Z are respectively the directions of the three coordinate axes in the spatial coordinate system, that is, the direction X is perpendicular to the direction Y, the direction X is perpendicular to the direction Z, and the direction Y is perpendicular to the direction Z. Of course, the plurality of positioning columns 30 on the cushion pad 20 and the plurality of positioning holes 101 in the restraint frame 10 may alternatively be distributed in other directions. The plurality of positioning columns 30 on the cushion pad 20 may even be distributed irregularly, that is, the plurality of positioning columns 30 are randomly distributed among the positioning columns 30. Accordingly, the positioning holes 101 in the restraint frame 10 may also be distributed irregularly.

By adopting the foregoing technical solution, where the plurality of positioning columns 30 on the cushion pad 20 are inserted into the positioning holes 101 on the restraint frame 10 in one-to-one correspondence, on the one hand, the positioning strength and positioning accuracy of the cushion pad 20 on the restraint frame 10 can be improved, so as to mitigate the problem of misaligned assembly of the cushion pad 20 on the restraint frame 10; and on the other hand, the assembly strength of the cushion pad 20 on the restraint frame 10 can be improved, so as to mitigate the problem that the cushion pad 20 tends to fall off the restraint frame 10.

In some embodiments, refer collectively to FIGS. 3 to 5, and also in combination with other drawings. The positioning columns 30 are inserted into the positioning holes 101 along the first direction Z. The plurality of positioning columns 30 include at least one first positioning column 30a and at least one second positioning column 30b. The cross-sectional area of the first positioning column 30a perpendicular to the first direction Z is greater than the cross-sectional area of the second positioning column 30b perpendicular to the first direction Z.

As shown in FIGS. 4 and 5, among the plurality of positioning columns 30, a part of the positioning columns 30 is the first positioning columns 30a, and the number of the first positioning columns 30a is at least one; and the other part of the positioning columns 30 is the second positioning columns 30b, and the number of the second positioning columns 30b is at least one. Accordingly, among the plurality of positioning holes 101, a part of the positioning holes 101 is the first positioning holes 101a, and the number of the first positioning holes 101a is at least one; and the other part of the positioning holes 101 is the second positioning holes 101b, and the number of the second positioning holes 101b is at least one. That is, the plurality of positioning holes 101 include at least one first positioning hole 101a and at least one second positioning hole 101b. Specifically, each first positioning column 30a is inserted into a first positioning hole 101a, and each second positioning hole 101b is inserted into a second positioning hole 101b.

The positioning columns 30 and the positioning holes 101 are adapted to each other, that is, the first positioning column 30a is adapted to the first positioning hole 101a, and the second positioning column 30b is adapted to the second positioning hole 101b. The cross-sectional area of the first positioning column 30a perpendicular to the first direction Z is greater than the cross-sectional area of the second positioning column 30b perpendicular to the first direction Z. Accordingly, the diameter of the first positioning hole 101a is greater than the diameter of the second positioning hole 101b. As an example, the positioning columns 30 are cylindrical. The diameter of the first positioning column 30a is greater than the diameter of the second positioning column 30b.

The positioning columns 30 include a first positioning column 30a and a second positioning column 30b of different sizes, so as to be inserted into the positioning holes 101 of corresponding sizes. In this way, when assembling the cushion pad 20, the first positioning column 30a can be inserted into the first positioning hole 101a, and the second positioning column 30b can be inserted into the second positioning hole 101b. Through such arrangement, the positioning strength and positioning accuracy of the cushion pad 20 on the restraint frame 10 can be improved, so as to mitigate the problem of misaligned assembly of the cushion pad 20 on the restraint frame 10. Also, the positioning of the cushion pad 20 on the restraint frame 10 can be facilitated, so that the positioning and assembly efficiency of the cushion pad 20 on the restraint frame 10 can be improved.

In some embodiments, refer collectively to FIGS. 3 to 5, and also in combination with other drawings. There is one first positioning column 30a, and there are a plurality of second positioning columns 30b.

Accordingly, as shown in FIG. 5, there is one first positioning hole 101a, and there are a plurality of second positioning holes 101b. The first positioning column 30a is correspondingly inserted into the first positioning hole 101a, and the plurality of second positioning columns 30b are inserted and fitted into the plurality of second positioning holes 101b in one-to-one correspondence.

By adopting the above technical solution, when assembling the cushion pad 20, first the first positioning column 30a can be aligned with the first positioning hole 101a to achieve the pre-positioning of the cushion pad 20 on the restraint frame 10. Then, the position of the cushion pad 20 is adjusted so that the plurality of second positioning columns 30b are inserted into the plurality of second positioning holes 101b in one-to-one correspondence, thereby realizing the positioning of the cushion pad 20 on the restraint frame 10. Through such arrangement, the cushion pad 20 is pre-positioned on the restraint frame 10 via the first positioning column 30a, which enables rapid positioning of the cushion pad 20 on the restraint frame 10, thereby improving the positioning and assembly efficiency of the cushion pad 20 on the restraint frame 10.

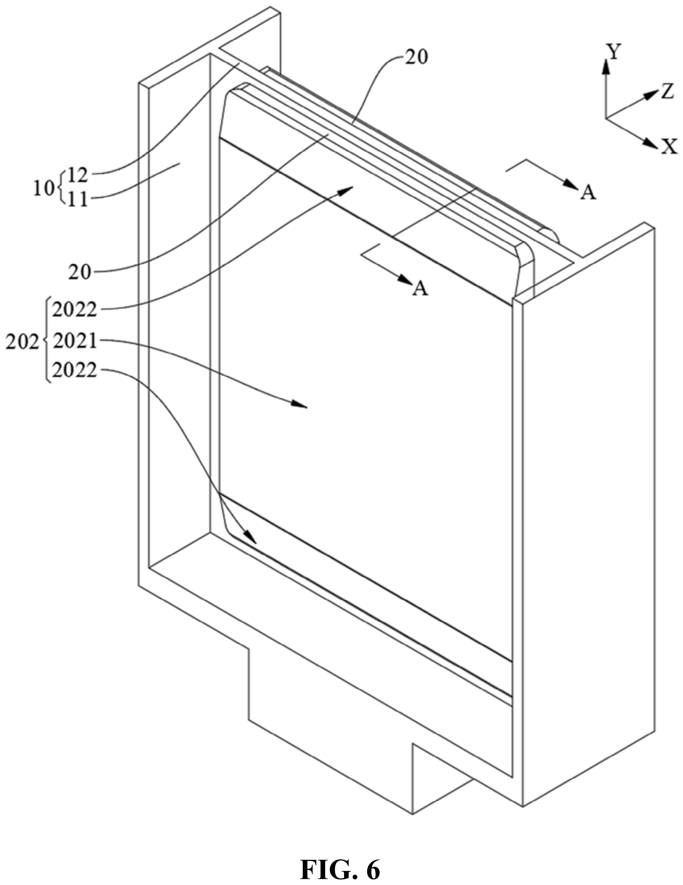

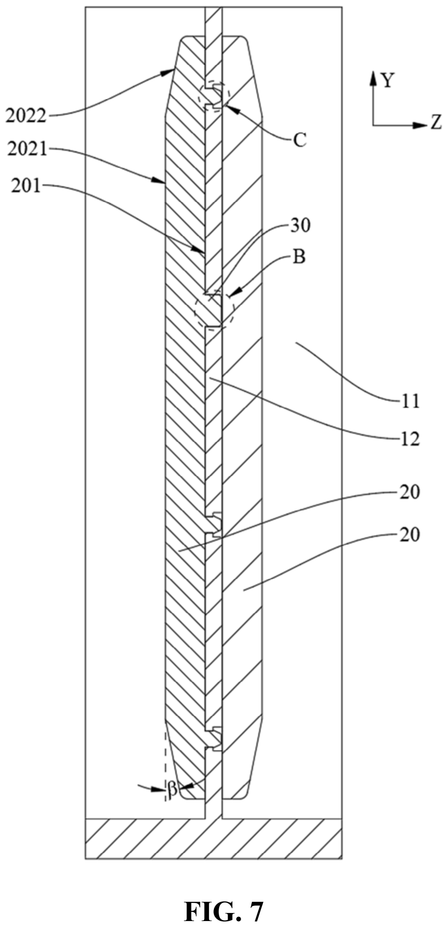

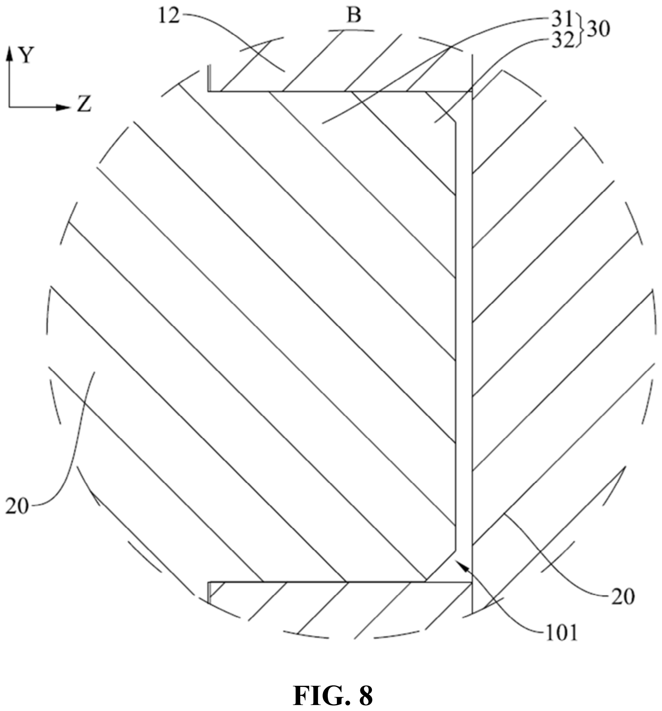

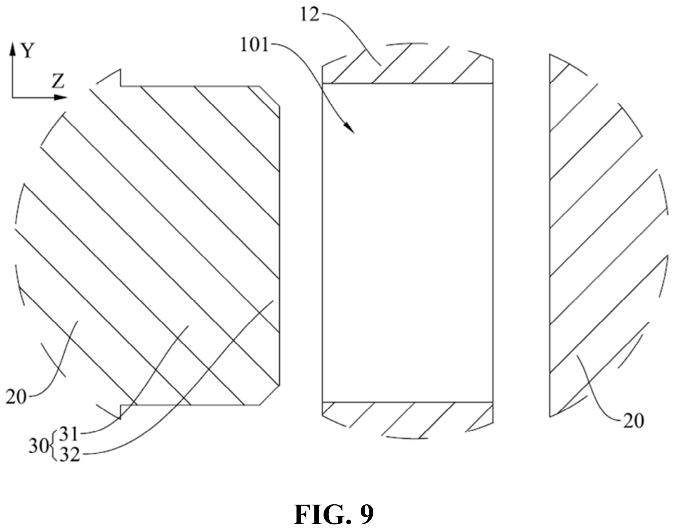

In some embodiments, refer collectively to FIGS. 6 to 9, and also in combination with other drawings. Specifically, FIG. 6 is a partial schematic perspective view of the restraint structure 100 provided by some embodiments of the present application, FIG. 7 is a cross-sectional view along line A-A of FIG. 6, FIG. 8 is a partial enlarged view of FIG. 7, and FIG. 9 is an exploded view of the structure shown in FIG. 8. The positioning column 30 is inserted into the positioning hole 101 along the first direction Z. The positioning column 30 includes a column body 31 and a guidance portion 32. In the first direction Z, one end of the column body 31 is arranged on the cushion pad 20, and the guidance portion 32 is connected to the end of the column body 31 away from the cushion pad 20. Furthermore, the outer peripheral wall of the guidance portion 32 is tapered in the direction away from the cushion pad 20.

As shown in FIGS. 6 to 9, the cushion pad 20 is arranged on a side of the restraint frame 10 along the first direction Z. One side of the cushion pad 20 along the first direction Z faces the restraint frame 10, and the side of the cushion pad 20 away from the restraint frame 10 along the first direction Z is used to abut against the battery cell 2000 to restrain the battery cell 2000. The column body 31 and the guidance portion 32 of the positioning column 30 are arranged sequentially along the first direction Z. Specifically, the column body 31 of the positioning column 30 is arranged on the side of the cushion pad 20 along the first direction Z facing the restraint frame 10, and the guidance portion 32 is arranged at the end of the column body 31 along the first direction Z away from the cushion pad 20.

The axial outer peripheral wall of the guidance portion 32 is tapered along the first direction Z away from the cushion pad 20. As an example, the guidance portion 32 may be a frustum, the diameter of which gradually decreases away from the column body 31 along the first direction Z. As an example, the guidance portion 32 may be a truncated pyramid, and the cross section of the truncated pyramid perpendicular to the first direction Z gradually decreases away from the column body 31 along the first direction Z.

It can be understood that the first positioning column 30a may include the column body 31 and guidance portion 32 described above, and the second positioning column 30b may also include the column body 31 and guidance portion 32 described above.

By adopting the above technical solution, in the process of assembling the cushion pad 20 to the restraint frame 10, when the positioning column 30 is inserted into the positioning hole 101, the guidance portion 32 of the positioning column 30 is first inserted into the positioning hole 101, and then the column body 31 of the positioning column 30 is inserted into the positioning hole 101. Based on the fact that the outer peripheral wall of the guidance portion 32 is tapered in the direction away from the cushion pad 20, the axial outer peripheral wall of the guidance portion 32 slides along the edge of the positioning hole 101 during the insertion of the guidance portion 32 into the positioning hole 101, so that the guidance portion 32 can enter the positioning hole 101 with guidance, such that the column body 31 can enter the positioning hole 101. Through such arrangement, the positioning column 30 can be inserted into the positioning hole 101 with guidance, so that the positioning of the cushion pad 20 on the restraint frame 10 can be facilitated, and the positioning and assembly efficiency of the cushion pad 20 on the restraint frame 10 can be improved.

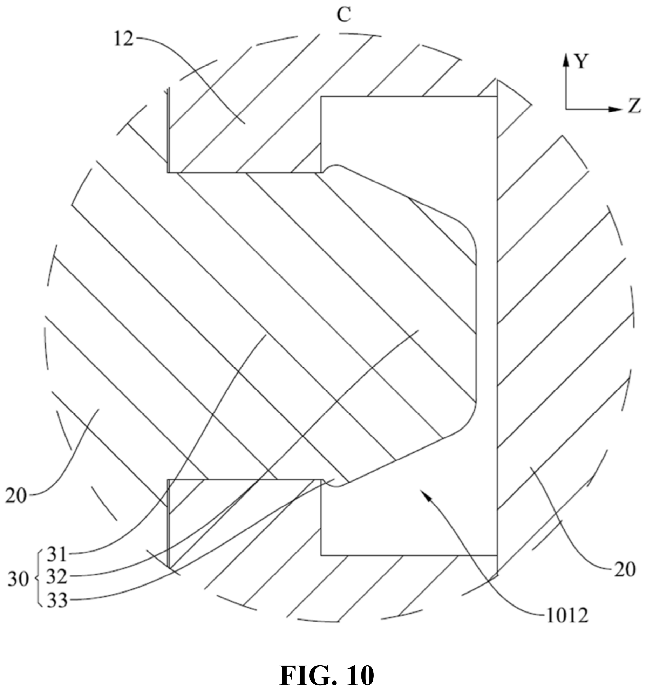

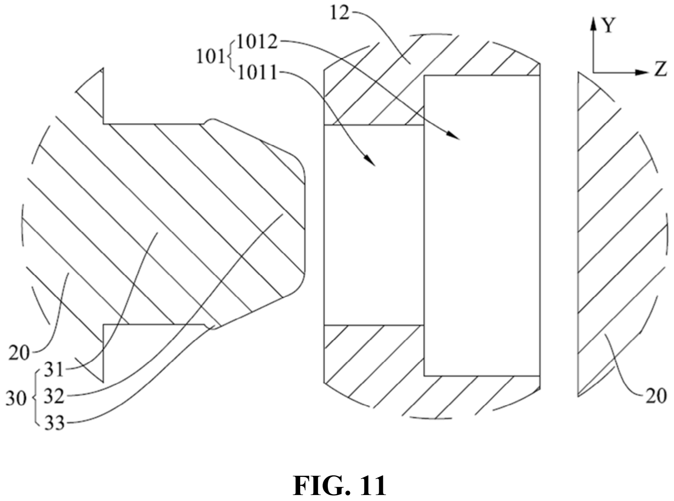

In some embodiments, refer collectively to FIGS. 10 and 11, and also in combination with other drawings. Specifically, FIG. 10 is a partial enlarged view of FIG. 7, and FIG. 11 is an exploded view of the structure shown in FIG. 10. In at least one positioning column 30, the end of the guidance portion 32 close to the column body 31 extends beyond the outer peripheral wall of the column body 31.

It can be understood that at least one positioning column 30 is configured such that the end of the guidance portion 32 close to the column body 31 extends beyond the outer peripheral wall of the column body 31 along a direction perpendicular to the first direction Z. That is, the cross section of the end of the guidance portion 32 close to the column body 31 perpendicular to the first direction Z is larger than the cross section of the column body 31 perpendicular to the first direction Z. As an example, when the column body 31 is a cylindrical structure and the guidance portion 32 is a frustum, the diameter of the end of the guidance portion 32 close to the column body 31 is greater than the diameter of the column body 31.

In some implementations, as shown in FIGS. 10 and 11, the second positioning column 30b can be configured such that the end of the guidance portion 32 close to the column body 31 extends beyond the outer peripheral wall of the column body 31. In some implementations, the first positioning column 30a can also be configured such that the end of the guidance portion 32 close to the column body 31 extends beyond the outer peripheral wall of the column body 31.

By adopting the above technical solution, when the positioning column 30 is inserted into the positioning hole 101, the part of the guidance portion 32 that extends beyond the outer peripheral wall of the column body 31 can abut against the restraint frame 10 along the first direction Z, so that the positioning column 30 can be fixed in the positioning hole 101 of the restraint frame 10. In this way, the assembly strength of the cushion pad 20 on the restraint frame 10 can be improved.

In some embodiments, referring collectively to FIGS. 10 and 11, and also in combination with other drawings, the positioning column 30 is inserted into the positioning hole 101 along the first direction Z. At least one positioning hole 101 includes a first hole segment 1011 and a second hole segment 1012 in communication sequentially along the first direction Z, the diameter of the second hole segment 1012 being greater than the diameter of the first hole segment 1011. The column body 31 is inserted into the first hole segment 1011, and the guidance portion 32 is limited within the second hole segment 1012 along the direction from the second hole segment 1012 to the first hole segment 1011.

It can be understood that the guidance portion 32 is limited within the second hole segment 1012 along the first direction Z in the direction from the second hole segment 1012 to the first hole segment 1011. It can also be understood that the guidance portion 32 is limited within the second hole segment 1012 along the first direction Z in the direction towards the first hole segment 1011.

It should be noted that when the first positioning column 30a is configured such that the end of the guidance portion 32 close to the column body 31 extends beyond the outer peripheral wall of the column body 31, as shown in FIGS. 10 and 11, the first positioning hole 101a includes the first hole segment 1011 and the second hole segment 1012 in communication sequentially along the first direction Z. When the second positioning column 30b is configured such that the end of the guidance portion 32 close to the column body 31 extends beyond the outer peripheral wall of the column body 31, the second positioning hole 101b includes the first hole segment 1011 and the second hole segment 1012 in communication sequentially along the first direction Z.

It should also be noted that, as shown in FIGS. 10 and 11, the diameter of the second hole segment 1012 is greater than the diameter of the first hole segment 1011, so that a stepped structure is formed at the connection position of the first hole segment 1011 and the second hole segment 1012.

As an example, as shown in FIGS. 8 and 9, the end of the guidance portion 32 of the first positioning column 30a close to the column body 31 does not extend beyond the outer peripheral wall of the column body 31. As shown in FIGS. 10 and 11, the end of the guidance portion 32 close to the column body 31 extends beyond the outer peripheral wall of the column body 31, and the second positioning hole 101b includes said first hole segment 1011 and second hole segment 1012. For ease of description, the embodiments of the present application use this example to describe the assembly of the positioning column 30 and the positioning hole 101.

When the second positioning column 30b is inserted into the second positioning hole 101b, the column body 31 of the second positioning column 30b is inserted into the first hole segment 1011, and the guidance portion 32 of the second positioning column 30b is located in the second hole segment 1012. Furthermore, the guidance portion 32 is limited along the first direction Z toward the column body 31 on the stepped structure formed between the first hole segment 1011 and the second hole segment 1012, thereby fixing the second positioning column 30b within the second positioning hole 101b.

By adopting the above technical solution, at least one positioning column 30 can be limited within the positioning hole 101 by the guidance portion 32, so as to fix the positioning column 30 and the restraint frame 10, thereby improving the fixing strength of the cushion pad 20 on the restraint frame 10. Furthermore, the guidance portion 32 is located in the second hole segment 1012, so that the positioning column 30 does not extend beyond the side of the restraint frame 10 away from the cushion pad 20 along the first direction Z, thereby allowing opposite sides of the restraint frame 10 along the first direction Z both to be used for assembling the cushion pad 20 to restrain the battery cell 2000.

In some embodiments, refer collectively to FIGS. 10 and 11, and also in combination with other drawings. In at least one positioning column 30, the end of the guidance portion 32 close to the column body 31 extends beyond the outer peripheral wall of the column body 31. Furthermore, the positioning column 30 further includes a transition portion 33, and the column body 31, the transition portion 33, and the guidance portion 32 are arranged sequentially along the first direction Z. In the first direction Z, the outer peripheral wall of the transition portion 33 is tapered from the guidance portion 32 toward the column body 31.

As shown in FIGS. 10 and 11, the transition portion 33 is arranged between the column body 31 and the guidance portion 32, and is connected to the column body 31 and the guidance portion 32 respectively. Specifically, the transition portion 33 is the part of the positioning column 30 that serves for transition between the column body 31 and the guidance portion 32.

Based on this, in the process of inserting the positioning column 30 into the positioning hole 101, the guidance portion 32, the transition portion 33, and the column body 31 of the positioning column 30 enter the positioning hole 101 sequentially. When the positioning column 30 is inserted into the positioning hole 101, the transition portion 33 and the guidance portion 32 are both located in the second hole segment 1012, and the transition portion 33 abuts against the stepped structure formed between the first hole segment 1011 and the second hole segment 1012.

In some implementations, as shown in FIGS. 10 and 11, on the cross section of the positioning column 30 parallel to the first direction Z, the outer peripheral wall of the guidance portion 32 may be a convex arc surface. Specifically, the outer peripheral wall of the transition portion 33 protrudes radially away from the central axis of the positioning column 30. In some other implementations, on the cross section of the positioning column 30 parallel to the first direction Z, the outer peripheral wall of the guidance portion 32 may be an inclined surface relative to the first direction Z. Based on this, the transition portion 33 may be a frustum or a truncated pyramid. In yet some other implementations, on the cross section of the positioning column 30 parallel to the first direction Z, the outer peripheral wall of the guidance portion 32 may be a combination of an inclined surface relative to the first direction Z and a convex arc surface.

By providing the transition portion 33, the guidance portion 32 can be easily removed from the positioning hole 101, which in turn facilitates the removal of the positioning column 30 from the positioning hole 101, and further facilitates the replacement of the cushion pad 20 on the restraint frame 10.

In some embodiments, the guidance portion 32 of the positioning column 30 can be configured as a component with elastic properties such as silicone or rubber, so that the guidance portion 32 can be squeezed and deformed in the positioning hole 101, and once it is restored, the positioning column 30 can be limited on the restraint frame 10. This facilitates the installation and removal of the positioning column 30 in the positioning hole 101. Accordingly, the transition portion 33 of the positioning column 30 can also be configured as a component with elastic properties such as silicone or rubber, so that the transition portion 33 can be squeezed and deformed, thereby facilitating the installation and removal of the positioning column 30 in the positioning hole 101.

In some embodiments, the cushion pad 20 is provided integrally with the positioning column 30.

Through such arrangement, the positioning column 30 is enabled to also have a cushion effect, allowing the positioning column 30 to be squeezed and deformed to smoothly enter and exit the positioning hole 101. In this way, the installation and removal of the positioning column 30 on the positioning hole 101 is facilitated to facilitate the installation and removal of the cushion pad 20 on the restraint frame 10.

In some embodiments, refer collectively to FIGS. 5 to 7, and also in combination with other drawings. The positioning columns 30 are inserted into the positioning holes 101 along the first direction Z. The restraint frame 10 includes a frame body 11 and a partition 12, the partition 12 being arranged the frame body 11. The partition 12 is provided with the aforementioned positioning holes 101, and cushion pads 20 are provided on opposite sides of the partition 12 along the first direction Z.

The frame body 11 is the frame part of the restraint frame 10, and is mainly used for installing the partition 12.

The partition 12 has a plate-like structure. The partition 12 is mainly used for installing the cushion pad 20 to separate two adjacent battery cells 2000 along the first direction Z and to restrain the two adjacent battery cells 2000 along the first direction Z. Specifically, the thickness direction of the partition 12 is parallel to the first direction Z. The partition 12 and the frame body 11 may be integrally formed or may be separate pieces that are connected together.

As shown in FIGS. 5 to 7, cushion pads 20 are provided on opposite sides of the partition 12 along the first direction Z. Based on this, in the first direction Z, the restraint structure 100 abuts against one of the battery cells 2000 through the cushion pad 20 on one side of the partition 12, so as to restrain the battery cell 2000 together with one of the adjacent restraint structures 100. Furthermore, in the first direction Z, the restraint structure 100 abuts against another battery cell 2000 through the cushion pad 20 on the other side of the partition 12, so as to restrain the battery cell 2000 together with the other adjacent restraint structure 100.

As shown in FIGS. 5 to 7, the partition 12 has a plurality of positioning holes 101 that are spaced apart. The positioning columns 30 on the cushion pads 20 on opposite sides of the partition 12 can be inserted and fitted into the corresponding positioning holes 101 on the partition 12 to achieve positioning of the cushion pads 20 on both sides of the partition 12 on the partition 12.

Through such arrangement, the restraint structure 100 is allowed to be located between two adjacent battery cells 2000 along the first direction Z, so as to restrain the two adjacent battery cells 2000 respectively.

In some embodiments, refer collectively to FIGS. 3 to 5, and also in combination with other drawings. The positioning columns 30 on the cushion pads 20 on the opposite sides of the partition 12 are staggered.

Accordingly, the positioning holes 101 on the partition 12 include two parts. One part of the positioning holes 101 is used for insertion and fitting of the positioning column 30 on the cushion pad 20 on one side of the partition 12 along the first direction Z. The other part of the positioning holes 101 is used for insertion and fitting of the positioning column 30 on the cushion pad 20 on the other side of the partition 12. Furthermore, the two parts of positioning holes 101 on the partition 12 are staggered.

As an example, as shown in FIGS. 3 to 5, the plurality of positioning columns 30 on the cushion pad 20 are arranged in an array, and the center of the array formed by the plurality of positioning columns 30 on the cushion pad 20 is spaced apart from the geometric center of the cushion pad 20. For example, as shown in FIG. 4, the center of the array formed by the plurality of positioning columns 30 on the cushion pad 20 is offset along the direction X from the geometric center of the cushion pad 20. Furthermore, the cushion pads 20 on the opposite sides of the partition 12 along the first direction Z have the same structure. Based on this, when the two cushion pads 20 are respectively arranged on the opposite sides of the partition 12, the centers of the arrays formed by the positioning columns 30 on the two cushion pads 20 are offset along the direction X in opposite orientations, so that the positioning columns 30 on the two cushion pads 20 are staggered along the direction X. Accordingly, the two parts of positioning holes 101 on the partition 12 are staggered along the direction X.

Through such arrangement, it is ensured that when the positioning columns 30 on the cushion pads 20 on the opposite sides of the partition 12 along the first direction Z are inserted and fitted into the positioning holes 101 on the partition 12, the positioning columns 30 on the cushion pads 20 on the opposite sides of the partition 12 will not interfere with each other. Based on this, on the one hand, the positioning hole 101 can be a through hole that runs through the partition 12 along the first direction Z, meaning that the thickness of the partition 12 can be made very small, which helps to reduce the size of the restraint structure 100 along the first direction Z. On the other hand, it facilitates the positioning of the cushion pads 20 on the opposite sides of the partition 12 on the partition 12.

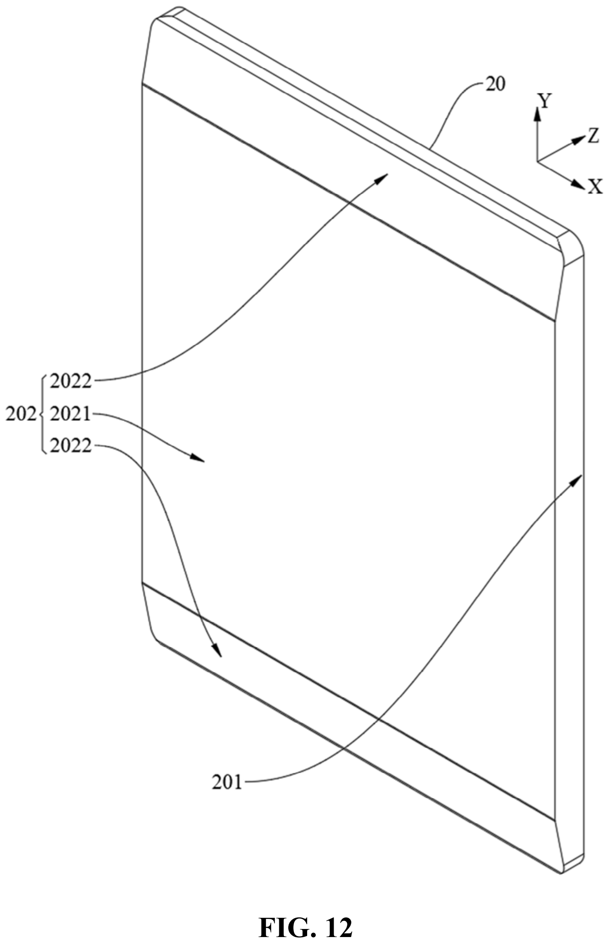

In some embodiments, refer collectively to FIGS. 2 to 4 and 12, and also in combination with other drawings. Specifically, FIG. 12 is a schematic perspective view of a cushion pad 20 of a restraint structure 100 according to some embodiments of the present application. The cushion pad 20 is provided with a first side surface 201 and a second side surface 202 on opposite sides along the first direction Z respectively, the positioning column 30 is arranged on the first side surface 201; and the second side surface 202 is recessed at one or both ends along the second direction Y, the first direction Z intersecting with the second direction Y.

As shown in FIGS. 2 to 4 and 12, one side surface of the cushion pad 20 along the first direction Z is the first side surface 201, and the other side surface of the cushion pad 20 along the first direction Z is the second side surface 202. The first side surface 201 and the second side surface 202 are arranged opposite to each other along the first direction Z. Specifically, the first side surface 201 is arranged on the side of the cushion pad 20 close to the partition 12 along the first direction Z, and is arranged towards the partition 12 along the first direction Z. The second side surface 202 is arranged on the side of the cushion pad 20 away from the partition 12 along the first direction Z, and is used to abut against the battery cell 2000.

As shown in FIGS. 2 to 4 and 12, the two opposite ends of the second side surface 202 are recessed in the second direction Y. In other embodiments, in the second direction Y, one end of the second side surface 202 is recessed.

It should be noted that the second direction Y refers to the direction that intersects with the first direction Z. Specifically, the second direction Y may be the direction Y shown in FIGS. 2 to 4 and 12, or it may be the direction X, or it may even be a direction that intersects with the first direction Z, the direction Y, and the direction X respectively. The first direction Z intersecting with the second direction Y means that the first direction Z and the second direction Y are not parallel, that is, an included angle greater than 0° and less than 180° is formed between the first direction Z and the second direction Y. The first direction Z and the second direction Y may be perpendicular to each other, or may not be perpendicular. The first direction Z and the second direction Y may be intersecting directions lying on the same plane, or may be directions residing on mutually non-coplanar planes, and a projection of the second direction Y on the plane in which the first direction Z lies may intersect with the first direction Z.

By adopting the above technical solution, the squeezing stress of the cushion pad 20 on the battery cell 2000 can be concentrated in the middle of the cushion pad 20 along the second direction Y. In this way, the cushion pad 20 can better squeeze and restrain the pole piece, separator, and other components inside the battery cell 2000, which can mitigate the problem of indentations pressed into the edge of the battery cell 2000 along the second direction Y, thereby improving the restraint effect of the restraint structure 100 on the battery cell 2000. Furthermore, when the battery cell 2000 is placed on the side of the restraint structure 100 along the first direction Z, the battery cell 2000 can slide along the recessed portion of the cushion pad 20. In this way, the cushion pad 20 can guide the battery cell 2000, which facilitates placement of the battery cell 2000 on the side of the restraint structure 100 along the first direction Z, and particularly facilitates placement of the battery cell 2000 between two adjacent restraint structures 100 along the first direction Z.

In some embodiments, refer collectively to FIGS. 2 to 4 and 12, and also in combination with other drawings. The second side surface 202 includes a first restraint surface 2021 and a second restraint surface 2022. As shown in FIGS. 2 to 4 and 12, when the cushion pad 20 is recessed at both ends along the first direction Z, the first restraint surface 2021 has the aforementioned second restraint surface 2022 at both ends along the second direction Y. That is, in the second direction Y, the first restraint surface 2021 is located between the two second restraint surfaces 2022. When one end of the cushion pad 20 along the first direction Z is recessed, the second restraint surface 2022 is arranged at one end of the first restraint surface 2021 along the second direction Y, that is, the first restraint surface 2021 and the second restraint surface 2022 are sequentially distributed along the second direction Y. Furthermore, as shown in FIGS. 2 to 4 and 12, in the second direction Y, the distance between the second restraint surface 2022 and the first side surface 201 gradually decreases in the direction away from the first restraint surface 2021.

It can be understood that the second restraint surface 2022 is recessed relative to the first restraint surface 2021 along the first direction Z. Furthermore, the distance between the second restraint surface 2022 and the first side surface 201 along the first direction Z gradually decreases in the direction away from the first restraint surface 2021.

In some implementations, on a cross section of the cushion pad 20 perpendicular to the third direction X, the second restraint surface 2022 may be an inclined surface relative to the first direction Z and the second direction Y or an arc surface. In some other implementations, on a cross section of the cushion pad 20 perpendicular to the third direction X, the second restraint surface 2022 may be provided as a combination of an inclined surface relative to the first direction Z and the second direction Y and an arc surface. Here, the third direction X intersects with the first direction Z and the second direction Y, and the third direction X is the direction X shown in the figures.

Through such arrangement, the problem of indentations pressed by the second restraint surface 2022 into the edges of the battery cell 2000 along the second direction Y can be mitigated. On the other hand, the second restraint surface 2022 can guide the battery cell 2000, which facilitates placement of the battery cell 2000 on the side of the restraint structure 100 along the first direction Z.

In some embodiments, refer collectively to FIGS. 2 to 4, 7, and 12, and also in combination with other drawings. An included angle less than 45° is formed between extended planes of the second restraint surface 2022 and the first restraint surface 2021.

As shown in FIG. 7, on the cross section of the cushion pad 20 perpendicular to the direction X, an included angle β is formed between the extension line of the first restraint surface 2021 along the second direction Y and the second restraint surface 2022, where β < 45°, and for example, it may be 5°, 10°, 15°, 20°, 25°, 30°, 35°, 40°, etc.

By adopting the above technical solution, the squeezing and restraining stress of the part of the cushion pad 20 at the second restraint surface 2022 on the battery cell 2000 can be reduced, thereby mitigating the problem of indentations pressed by the cushion pad 20 into the edge of the battery cell 2000 along the second direction Y. Furthermore, the part of the cushion pad 20 at the second restraint surface 2022 is still enabled to provide a certain restraint stress to the battery cell 2000, thereby improving the restraint effect of the restraint structure 100 on the battery cell 2000.

In some embodiments, refer collectively to FIGS. 2 and 3, and also in combination with other drawings. The restraint structure 100 further includes a separation film 40, and the separation film 40 covers the cushion pad 20 to separate the cushion pad 20 from the battery cell 2000.

The separation film 40 refers to the film material that can separate the cushion pad 20 from the battery cell 2000. Specifically, the separation film 40 may be a Mylar film or other types of film materials.

Specifically, the separation film 40 is positioned to avoid the positioning columns 30.

By adopting the technical solution described above so that the separation film 40 can separate the cushion pad 20 from the battery cell 2000, on the one hand, the problem of the cushion pad 20 sticking to the battery cell 2000 can be mitigated, and on the other hand, the problem of contaminants due to squeezing by the cushion pad 20 remaining on the battery cell 2000 can be mitigated.

Based on the above concept, referring to FIG. 1 and in combination with other drawings, an embodiment of the present application further provides a battery restraint apparatus 1000, and the battery restraint apparatus 1000 includes a restraint structure 100. Specifically, the restraint structure 100 in this embodiment is the same as the restraint structure 100 in the previous embodiment. For details, please refer to the relevant description of the restraint structure 100 in the previous embodiment, which will not be repeated here.

With the battery restraint apparatus 1000 provided by the embodiments of the present application, by adopting the restraint structure 100 mentioned above in the foregoing embodiments, the problem of misaligned assembly of the cushion pad 20 on the restraint frame 10 can be mitigated, thereby facilitating improving the restraint effect of the battery restraint apparatus 1000 on the battery cell 2000.

As one of the embodiments of the present application, as shown in FIGS. 2 to 11, the restraint structure 100 includes a restraint frame 10 and two cushion pads 20. The restraint frame 10 includes a frame body 11 and a partition 12 arranged on the frame body 11, and a plurality of positioning holes 101 that are spaced apart are formed in the partition 12. The two cushion pads 20 are respectively arranged on opposite sides of the partition 12 along the first direction Z. The cushion pad 20 is provided with a first positioning column 30a and a plurality of second positioning columns 30b that are spaced apart. The diameter of the first positioning column 30a is greater than the diameter of the second positioning columns 30b, and the first positioning column 30a is spaced apart from the second positioning columns 30b. The positioning holes 101 on the partition 12 include a first positioning hole 101a and a second positioning hole 101b. The first positioning column 30a is inserted into the first positioning hole 101a along the first direction Z, and the second positioning column 30b is inserted into the second positioning hole 101b along the first direction Z. The second positioning column 30b includes a column body 31, a transition portion 33, and a guidance portion 32 which are sequentially arranged along the first direction Z. The diameter of the end of the guidance portion 32 close to the column body 31 along the first direction Z is greater than the diameter of the column body 31, and the diameter of the transition portion 33 gradually decreases from the guidance portion 32 to the column body 31. The second positioning hole 101b includes a first hole segment 1011 and a second hole segment 1012 in communication sequentially along the first direction Z, the diameter of the second hole segment 1012 being greater than the diameter of the first hole segment 1011. The column body 31 is inserted into the first hole segment 1011, the transition portion 33 and the guidance portion 32 are located in the second hole segment 1012, and are limited in the second hole segment 1012 along the first direction Z toward the cushion pad 20 where the positioning column 30 is located. The outer peripheral wall of the guidance portion 32 is tapered along the first direction Z away from the column body 31. Furthermore, the positioning holes 101 on the partition 12 include two parts. One part is used for insertion and fitting of the positioning column 30 on one side of the partition 12, and the other part is used for insertion and fitting of the positioning column 30 on the other side of the partition 12, and the positioning holes 101 of the two parts are staggered.

The above description presents merely optional embodiments of the present application and is not intended to limit the present application. For those skilled in the art, the present application may have various modifications and changes. Any modifications, equivalent substitutions, improvements, etc. made within the spirit and principles of the present application shall fall into the scope of the claims of the present application.

## Claims

1. A restraint structure (100), comprising:
a restraint frame (10) provided with a positioning hole (101);
a cushion pad (20) arranged on the restraint frame (10); and
a positioning column (30) arranged on the cushion pad (20) and inserted and fitted into the positioning hole (101).

2. The restraint structure (100) according to claim 1, wherein there are a plurality of positioning columns (30), the plurality of positioning columns (30) are spaced apart on the cushion pad (20); and the restraint frame (10) is provided with a plurality of positioning holes (101) that are spaced apart, and each positioning column (30) is inserted and fitted into one of the positioning holes (101).

3. The restraint structure (100) according to claim 2, wherein the plurality of positioning columns (30) on the cushion pad (20) are distributed in an array.

4. The restraint structure (100) according to claim 2 or 3, wherein the positioning columns (30) are inserted into the positioning holes (101) along a first direction (Z); the plurality of positioning columns (30) include at least one first positioning column (30a) and at least one second positioning column (30b), and the cross-sectional area of the first positioning column (30a) perpendicular to the first direction (Z) is greater than the cross-sectional area of the second positioning column (30b) perpendicular to the first direction (Z).

5. The restraint structure (100) according to claim 4, wherein there is one first positioning column (30a), and there are a plurality of second positioning columns (30b).

6. The restraint structure (100) according to any one of claims 1 to 5, wherein the positioning columns (30) are inserted into the positioning holes (101) along a first direction (Z); the positioning columns (30) each include a column body (31) and a guidance portion (32); in the first direction (Z), one end of the column body (31) is arranged on the cushion pad (20), the guidance portion (32) is connected to the end of the column body (31) away from the cushion pad (20), and an outer peripheral wall of the guidance portion (32) is tapered along the direction away from the cushion pad (20).

7. The restraint structure (100) according to claim 6, wherein in the at least one positioning column (32), the end of the guidance portion (32) close to the column body (31) extends beyond the outer peripheral wall of the column body (31).

8. The restraint structure (100) according to claim 7, wherein the positioning columns (30) are inserted into the positioning holes (101) along the first direction (Z); at least one of the positioning holes (101) comprises a first hole segment (1011) and a second hole segment (1012) in communication sequentially along the first direction (Z), the diameter of the second hole segment (1012) is greater than the diameter of the first hole segment (1011); the column body (31) is inserted into the first hole segment (1011), and the guidance portion (32) is limited within the second hole segment (1012) along the direction from the second hole segment (1012) to the first hole segment (1011).

9. The restraint structure (100) according to any one of claims 6 to 8, wherein at least one of the positioning columns (30) further comprises a transition portion (33), the column body (31), the transition portion (33), and the guidance portion (32) are arranged sequentially along the first direction (Z), and the end of the guidance portion (32) close to the column body (31) extends beyond the outer peripheral wall of the column body (31); and the outer peripheral wall of the transition portion (33) is tapered from the guidance portion (32) to the column body (31).

10. The restraint structure (100) according to any one of claims 5 to 9, wherein on the cross section of the positioning column (30) parallel to the first direction (Z), the outer peripheral wall of the guidance portion (32) is provided as a convex arc surface, or the outer peripheral wall of the guidance portion (32) is provided as an inclined surface relative to the first direction (Z), or the outer peripheral wall of the guidance portion (32) is provided as a combination of an inclined surface relative to the first direction (Z) and a convex arc surface.

11. The restraint structure (100) according to any one of claims 1 to 10, wherein the cushion pad (20) is provided integrally with the positioning columns (30).

12. The restraint structure (100) according to any one of claims 1 to 11, wherein the positioning columns (33) are inserted into the positioning holes (101) along a first direction (Z); the restraint frame (10) comprises a frame body (11) and a partition (12) provided on the frame body (11), the partition (12) has the positioning holes (101), and the cushion pads (20) are provided on opposite sides of the partition (12) along the first direction (Z).

13. The restraint structure (100) according to claim 12, wherein the positioning columns (30) on the cushion pads (20) on the opposite sides of the partition (12) are staggered.

14. The restraint structure (100) according to any one of claims 1 to 13, wherein the cushion pad (20) is provided with a first side surface (201) and a second side surface (202) on opposite sides along a first direction (Z) respectively, the positioning columns (30) are arranged on the first side surface (201) and are inserted into the positioning holes (101) along the first direction (Z); and the second side surface (202) is recessed at one or both ends along a second direction (Y), the first direction (Z) intersecting with the second direction (Y).

15. The restraint structure (100) according to claim 14, wherein the second side surface (202) comprises a first restraint surface (2021) and a second restraint surface (2022) arranged at one or both ends of the first restraint surface (2022) along the second direction (Y); and in the second direction (Y), the distance between the second restraint surface (2022) and the first side surface (2021) gradually decreases along the direction away from the first restraint surface (2021).

16. The restraint structure (100) according to claim 15, wherein on a cross section of the cushion pad (20) perpendicular to a third direction (X), the second restraint surface (2022) is an inclined surface relative to the first direction (Z) and the second direction (Y) or an arc surface, the third direction (X) being perpendicular to the first direction (Z) and the second direction (Y).

17. The restraint structure (100) according to claim 15 or 16, wherein an included angle less than 45° is formed between extended planes of the second restraint surface (2022) and the first restraint surface (2021).

18. The restraint structure (100) according to any one of claims 1 to 17, wherein the restraint structure (1) further comprises a separation film (40), and the separation film (40) covers the cushion pad (20) to separate the cushion pad (20) from a battery cell (2000).

19. A battery restraint apparatus (1000), comprising the restraint structure (100) according to any one of claims 1 to 18.
